# EUROPEAN PATENT APPLICATION

(11) **EP 2 772 864 A1**
(43) Date of publication of application: **03.09.2014**
(21) Application number: 12842858.8
(22) Date of filing: 04.08.2012
(51) Int. Cl.: G06F 17/30, H04M 3/56, H04N 7/15

(54) **CONTENT EVALUATION/PLAYBACK DEVICE**

(30) Priority: 27.10.2011 JP 2011236543; 26.11.2011 WO PCT/JP2011/006590; 27.11.2011 JP 2011258374
(71) Applicant: Synergy Drive Inc., Tokyo 171-0021 (JP)
(72) Inventor: ITAKURA, Yuichiro, Tokyo 171-0021 (JP)
(74) Representative: Casalonga
(86) International application number: PCT/JP2012/004965
(87) International publication number: WO 2013/061497

(57) **Abstract**

Provided is a system that: makes it possible to get a picture of how satisfaction levels of people viewing content change over time; and can generate content-playback timing and content summaries. A host computer: receives satisfaction-level-data time information and content information from each monitor terminal; computes satisfaction-level-data received count totals for a prescribed time period; organizes the distribution of satisfaction-level-data received count totals from the beginning of a piece of content to the end thereof in a chronological manner; and generates satisfaction-level-data chronological distribution data per piece of content information. When a satisfaction level is inputted into a monitor terminal via a satisfaction-level input means, a time period based on the playback timeline for the content in question is used as the time information for the satisfaction-level data, and the monitor terminal displays satisfaction-level-data chronological distribution data received from the host computer. The vicinity of a peak time in the satisfaction-level-data chronological distribution data is used as an index point, and that content is played for the prescribed time period, starting from said index point.

## Description

### [Technical Field]

The present invention relates to technologies for content evaluation and content playback via a communication network such as the Internet.

### [Background Art]

Nowadays, a streaming server houses dynamic image data, voice data, etc. , as content uploaded from a user terminal (monitor terminal), in addition to static image data. In response to a request from the user terminal (monitor terminal), for example, live content of dynamic image data, etc., are stream-delivered via the Internet to the user terminal (monitor terminal).

Where a user who has viewed stream-delivered content feels that the content is good or the content is not good, the user will send the feeling to the creator of the content as an evaluation comment with respect to the content by e-mail or makes a comment in a comment field.

However, the user makes an evaluation of the content after viewing the content. Therefore, for example, where the user feels that the content is good initially and after some time no longer feels that the content is good, the user is influenced by the last feeling and may evaluate that all the content is boring. In the above described case, it is not right in saying that the user makes a comprehensive evaluation of the content.

In order to avoid the above problems, there is known a content evaluation system which is capable of making an evaluation by reflecting a feeling that an individual has with respect to the content as a whole (Patent Document 1).

When a user terminal to which predetermined content is delivered expresses a feeling of viewership which constitutes an evaluation parameter for the content while viewing the content, the content evaluation system disclosed in Patent Document 1 receives information which indicates the thus exhibited feeling, aggregates the number of times that the feeling expressed by the information has been formed, indicates the feeling that the viewer has for the content in terms of a bar graph or a sequential line graph, while allowing the viewer to view the content, thereby evaluating the content.

[Patent Document 1] JPA-2003-030105

### [Outline of the Invention]

### [Problems to be Solved by the Invention]

However, the conventional content evaluation system disclosed in Patent Document 1 has the following problems. In the conventional content evaluation system, the user terminal to which predetermined content is delivered will transmit, while viewing the content, to a communication server the information which indicates the feeling constituting an evaluation parameter of the content. Next, the communication server aggregates the number of times that the feeling expressed by the information has been formed and transmits aggregate results to the user terminal. However, the user terminal uses the aggregate results only for evaluating the content and calculating an amount of contributions depending on the aggregate results.

Some of the live content of dynamic image data are to be viewed for a prolonged period of time or several hours. If only details of the content for which a sympathetic feeling has been formed can be extracted and viewed by using the above described aggregate results, a user will find it more convenient to view the content. Further, in a similar manner, only details of the content for which a sympathetic feeling has formed is combined to provide summarized content, by which the user will find it more convenient to view the content. That is, if such a system is available that only details of the content which are highly satisfied by viewers are edited and summarized automatically in the context of viewers and, with opinions of the viewer taken into account, it is possible to use the content in a more convenient manner.

Further, in the conventional content evaluation system, when the user terminal transmits to the communication server the information which indicates a feeling constituting an evaluation parameter for content while viewing the content, it uses no user attribute information. Therefore, nothing is known about what kind of evaluation has been made by viewer upon evaluation of the content. A sympathetic feeling is known to understand user attributes (such as age bracket and sex) which form the feeling, thus making it possible to evaluate the content more precisely.

With the above described situation taken into account, an object of the present invention is to provide a system which is capable of understanding a temporal change in content in relation to a satisfaction level of viewer, thereby generating timing of playback of content and a summary of the content.

### [Means to Solve the Objects]

In order to attain the above described object, a content evaluation playback system of the present invention is constituted with a network which transfers a packet by means of the Internet Protocol, at least one unit of a monitor terminal equipped with a content information displaying unit which identifies and displays spot information on a content resource present on the Internet, a graphical user interface which is composed of a satisfaction-level input unit for inputting a satisfaction level of content and a network interface, a host computer which exchanges data between the monitor terminals, and a content delivery server.

1) The host computer receives temporal information on satisfaction level data and content information from individual monitor terminals, calculates an aggregate of received counts in satisfaction level data within a predetermined period of time, expresses in chronological order a distribution of aggregate of received counts in satisfaction level data from the start of the content to the end thereof, which is then given as chronological distribution data of satisfaction level data for each of the content information, stores the chronological distribution data of satisfaction level data in association with the content information or in an integral manner, and transmits the chronological distribution data of satisfaction level data to the individual monitor terminals by request from the monitor terminals.

2) The monitor terminal gives time on the basis of a playback time line of the content as temporal information on satisfaction level data when the satisfaction level is input from the satisfaction-level input unit, displays the chronological distribution data of satisfaction level data received from the host computer, gives proximity of a peak time- instant ranked high in the chronological distribution data of satisfaction level data as an index point, thereby replaying content in a predetermined period of time from the index point.

According to the above constituted content evaluation playback system, it is possible to understand a temporal change in content in relation to a satisfaction level of viewer and also to generate timing of replaying the content and a summary of the content.

Here, the monitor terminal is a computer such as a mobile computer, a cellular phone and a PC (personal computer) which can be connected to a network for transferring a packet by using the Internet Protocol.

Further, the above described satisfaction-level input unit is, more specifically, a satisfaction level button which is displayed on a screen of the monitor terminal. The button is depressed, by which the satisfaction level data is transmitted via the network to the host computer at every predetermined interval. Where a viewer is satisfied with details of the content which have been delivered, the viewer is able to press the satisfaction level button. The satisfaction level button is given designations which can be freely set, for example, "good," "like," "satisfied," "interested," or "found interesting." More specifically, it is possible to use expressions at will on the screen of the monitor terminal, for example, "satisfied," "sympathy," "good," "bad," "like," "interested," "found interesting," "nice," "scared," "thrilling," "dislike," "becoming," "not becoming," "enjoyable," "skillful," "poor," "impressed," "want," "do not want," "agree," or "disagree."

Still further, depending on details of the content, it is acceptable that the meaning of the satisfaction level is replaced by "scared," "thrilling" or "dislike." For example, in the case of content of a horror film and content of reading of a mystery novel, the satisfaction level button may be given a different designation, whenever necessary.

It is also acceptable that the higher the satisfaction level is, the more frequently the satisfaction level button is pressed. For example, it is acceptable that satisfaction level data is input at least twice within a predetermined period of time, thus making it possible to input the satisfaction level data higher in satisfaction level. For example, where the satisfaction level data can be input only once every 15 seconds, the satisfaction level data is input several times (for example, the button is pressed many times), by which the monitor terminal counts the number of times that input operation has been performed and transmits data which is capable of distinguishing a magnitude of satisfaction level to the host computer.

It is also acceptable that a selection button is installed for inputting a satisfaction level so as to distinguish a magnitude of satisfaction level, for example, "very much satisfied," "satisfied" or "slightly satisfied," etc.

A received count of satisfaction-level data from the start of content to the end thereof is the number of times that the host computer has received satisfaction level data during a period from the start of delivering the content to the end of delivering the content. It is possible to calculate an aggregate of received counts of the satisfaction level data every second. However, in evaluating a satisfaction level of the content, in place of aggregating counts for a short period of time such as for each second, calculation is made for an aggregate of received counts within a predetermined period of time such as 30 seconds, one minute and two minutes. To express in chronological order a distribution of aggregate of received counts of satisfaction level data from the start of the content to the end thereof means to provide a histogram in which a horizontal axis represents time and a vertical axis represents an aggregate of received counts within a predetermined period of time.

It is noted that viewers of content include both viewers of live content etc., in real time from the start of a live show to the end thereof and viewers of content in which the live show has been recorded (stored).

Here, it is preferable that the host computer is able to update the distribution data of aggregate of received counts which is satisfaction level data expressed in a chronological order, that is, chronological distribution data of recorded satisfaction level data, by using temporal information on satisfaction level data of the same content information which is received later from the same or a different monitor terminal. This is because a received count of satisfaction level data to be received from the same or a different monitor terminal which has viewed the content later is merged into the chronological distribution data of satisfaction level data which has been already recorded (stored).

Further, in the above described content evaluation playback system, it is preferable that the monitor terminal is provided with a user registration unit which registers user attribute information and transmits thus registered user attribute information to the host computer. And, it is preferable that the host computer is provided with a unit which associates the satisfaction level data with the user attribute information obtained from the user registration unit.

Here, the user attribute is an attribute which is selected from a group including sex, age, occupation, hobby, year of birth, month of birth, animal symbol from the Chinese zodiac, blood type, marital history, nationality, birthplace, use language, residence, site of utilization, with or without child, age of child and academic history.

Sex, age, occupation, hobby, year of birth, month of birth, animal symbol from the Chinese zodiac, blood type, marital history, nationality and birth place are attributes inherent to a user. A use language is selected from the Japanese language, English language, Chinese language, French language, Spanish language and other languages that the user uses or is able to use. The use language is not limited to one but may include two or more languages. The residence and the site of utilization refer to an area where the user dwells at the present time or a place where the user utilizes a terminal. With or without child or the age of child is an attribute item in a case that the user has a child. Where the user has a plurality of children, it is information covering each of the children. The academic history is information on the academic history of the user.

Further, in the above described content evaluation playback system, the monitor terminal is able to set any given character string to any given time zone in the chronological distribution data of the above described satisfaction level data. Where any given character string is set, the monitor terminal transmits the content information, the time zone information and the character string to the host computer. Still further, upon receipt of the content information, the time zone information and the character string, the host computer stores them in association with the chronological distribution data of satisfaction level data of the content information.

Since any given character string can be set to any given time zone, the character string can be tagged to details of the content at any given time zone. The thus tagged information is shared with other users and taken into account as a reference of a playback point.

It is more preferable that the host computer is provided with a unit which makes analysis of tendencies of users who have input satisfaction level data to details of the specific content by using details of the content at the timing of receiving the satisfaction level data and a user attribute associated with the satisfaction level data. Analysis results of the tendencies of users can be used to automatically generate questionnaire data for the details of the specific content, market research data, statistical data and others. And, it is possible to utilize results of content evaluation in a more valuable way.

For example, it is possible to obtain statistical data such as age distribution of users who are satisfied with details of the content at a certain timing (such as the age of 10's, the age of 20' s and so on), categorization by sex, blood type, categorization by birth place and categorization by occupation. Since it is possible to analyze tendencies of users who have input satisfaction level data to details of the content of a certain timing, the details of the content can be controlled to generate various types of questionnaire data, market research data and statistical data.

Further, it is preferable that in the content evaluation playback system of the present invention, when the monitor terminal requests to carry out a search by giving a specific user attribute as a search key, the host computer transmits to the monitor terminal the chronological distribution of satisfaction level data with which the user attribute has been associated.

To give a specific user attribute as a search key is referred to searching a certain individual or only males on the basis of, for example, age category, animal symbol from the Chinese zodiac of year of birth, birth place and others. Next, the host computer transmits to the monitor terminal the chronological distribution of satisfaction level data with which the user attribute has been associated so that the monitor terminal is able to display in a graph, etc., the chronological distribution of satisfaction level data with which the user attribute acting as a search key has been associated.

Further, the index point of the content evaluation playback system in the present invention is, more specifically, time which is allowed to go back only by predetermined time from a peak time instant ranked high in the number of received counts of satisfaction level data.

It is in particular preferable that the index point is before a time instant which is allowed to go back only by predetermined time from a peak time instant ranked high in the number of received counts of satisfaction level data and also a time instant when a scene of content is to be switched.

Here, the peak time instant is offset time from a delivery start time instant in the case of live content. In viewing the content that has been recorded in advance, chronological information on received counts of satisfaction level data of viewers is offset time from a time instant of starting playback of content.

Data is to be reproduced from any of the above described index points. There are no particular restrictions on timing of terminating playback. For example, where a user makes a request for a next index point, the user may only jump to another index point.

Further, in the present invention, whether the number of received counts of satisfaction level data is ranked high or not is determined based on the fact that the number of received counts of satisfaction level data is greater than a threshold parameter. It is preferable that the threshold parameter can be adjusted depending on any parameter which is selected from the time of the start of content to the end thereof, request size for summary playback time and the number of viewers.

It is also preferable that playback time from an index point can be adjusted depending on the time from the start of content to the end thereof or the number of peaks greater than a threshold parameter of the number of received counts of satisfaction level data.

Further, in the present invention, in the case of playback from an index point, it is preferable that playback is performed in descending order of content with an index point which is earlier in time instant or in descending order of content which is higher in satisfaction level.

In the case of playback, it is in particular preferable that the content which is ranked higher in satisfaction level is made longer in playback time than the content which is ranked lower in satisfaction level.

In the present invention, it is acceptable that content is summarized in such a manner that content ranked high in a predetermined period of time which is greater in the number of received counts of the satisfaction level data is cut out, combined and summarized to generate data of the content. Accordingly, it is possible to take into account opinions of viewer and automatically summarize details of the content. That is, details of the content before and after a time instant high in satisfaction level of viewers are cut out and combined to summarize the content (digest version).

### [Effects of the Invention]

The present invention has such effects that a temporal change in satisfaction level of viewers who view content can be understood to generate a timing of playback of content and a summary of content.

### [Brief Description of the Drawings]

FIG. 1 shows a basic constitution of the content evaluation playback system.
FIG. 2 shows an illustration of content information.
FIG. 3 shows an illustration of content information and time information of satisfaction data.
FIG. 4 shows a constitution of the content evaluation playback system.
FIG. 5 shows an illustration of time information of satisfaction level data.
FIG. 6 shows a chronological distribution data of satisfaction level data respectively for monitor terminals.
FIG. 7 shows a chronological distribution data of satisfaction level data of content.
FIG. 8 shows a chart which shows the satisfaction level of content.
FIG. 9 shows a flow of extraction of peak values for a satisfaction level of content.
FIG. 10 shows a chronological chart 1 of satisfaction level of content.
FIG. 11 shows a chronological chart 2 of satisfaction level of content.
FIG. 12 shows a mode A of method for replaying a summary of content.
FIG. 13 shows a mode B of method for replaying a summary of content.
FIG. 14 shows a mode C of method for replaying a summary of content.
FIG. 15 shows a mode D of method for replaying a summary of content.
FIG. 16 shows a flow chart of processing by the host computer.
FIG. 17 shows an Explanatory view (1) of a threshold parameter of satisfaction level.
FIG. 18 shows an Explanatory view (2) of a threshold parameter of satisfaction level.
FIG. 19 shows a flow chart (1) for obtaining the index point.
FIG. 20 shows a flow chart (2) for obtaining the index point.
FIG. 21 shows a function block diagram of the content evaluation playback system.
FIG. 22 shows an Explanatory view of a table of user attributes.
FIG. 23 shows an Explanatory view (1) when the user attribute is associated with the satisfaction level data.
FIG. 24 shows an Explanatory view (2) when the user attribute is associated with the satisfaction level data.
FIG. 25 shows an Explanatory view (3) when the user attribute is associated with the satisfaction level data.
FIG. 26 shows an Explanatory view of tagging.
FIG. 27 shows an Explanatory view of tagging table.

### [Best Mode for Carrying Out the Invention]

Embodiments of the present invention will be described in detail below with reference to the drawings. The present invention is not limited to the following embodiment and examples of shown in the figure, and the present invention can be variously changed in design.

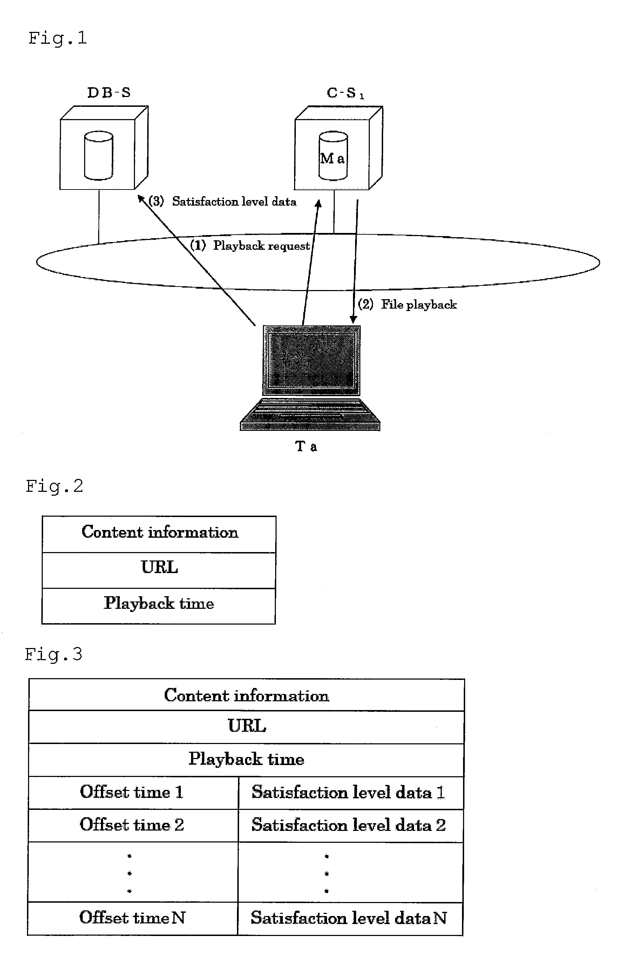

Fig. 1 shows a basic constitution of the content evaluation playback system of the present invention. The basic constitution of the content evaluation playback system in the present invention is composed of a host computer (DB-S), a monitor terminal Ta and a content delivery server (C-S₁). They are individually connected via the Internet and able to transfer data and files by using the Internet Protocol.

The content delivery server (C-S₁) is designed so as to effect stream-delivery to the monitor terminal Ta via the Internet.

The monitor terminal is a PC (personal computer) and, upon being switched on, a CPU reads out and carries out various types of program groups which are housed in a ROM and a hard disk. The CPU also carries out various types of processing such as WWW (World Wide Web) browsing to receive streaming content such as dynamic images from a streaming server.

As shown in Fig. 2, in the monitor terminal, content information is identified by referring to a URL (Uniform Resource Locator) and playback time. The URL specifies a site of a file present on the Internet. It is noted that in place of the URL, the site may be identified by a URI (Uniform Resource Identifier). The URI is a description for specifying or identifying a site of a resource such as a content file present on the Internet and includes the URL.

Where the monitor terminal Ta designates the URL to call content from a browser, as shown in Fig. 1, the monitor terminal makes a request to the content delivery server (C-S₁) for playback, downloading a content data file from a content delivery server and reproduces the content data file on the browser.

In this case, a button capable of inputting the satisfaction level in the course of the content playback is displayed on the browser for replaying the content data file.

During a period from the start of playback of the content to the end thereof, a user of the monitor terminal is able to use a mouse to click the button, by which the user is free to input the satisfaction level. At the timingwhen the button of the satisfaction level is clicked, the monitor terminal transmits satisfaction level data to the host computer (DB-S). Offset time data from the start of the content playback is also transmitted, upon transmission of the satisfaction level data.

The host computer (DB-S) stores in chronological order the satisfaction level data from the monitor terminals. A received count of the satisfaction level data from the start of content to the end thereof is the number of times of the satisfaction level data that the host computer has received from the start of content to the end of the content. Calculation is made for an aggregate of received counts every 30 seconds from the start of the content to the end thereof.

A data structure shown in Fig. 3 sets the offset time to be every 30 seconds. The satisfaction level data 1 to N is an aggregate of received counts of the satisfaction level data obtained every 30 seconds.

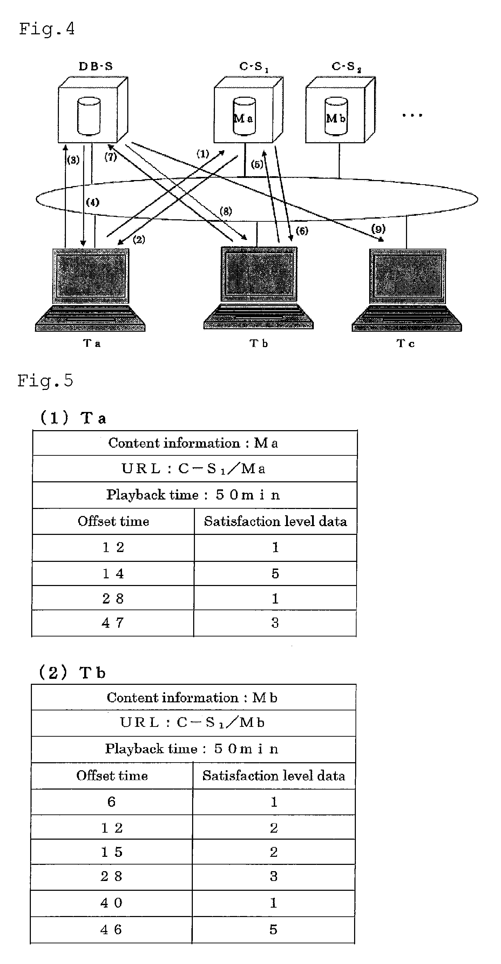

A description will be given of a constitution of the content evaluation playback system shown in Fig. 4 and the chronological distribution data of satisfaction level data in the content evaluation playback system with reference to Fig. 5 to Fig. 7.

In Fig. 4, reference symbols Ta to Tc denote a monitor terminal; DB-S, a host computer for generating the chronological distribution data of satisfaction level data; C-S₁, C-S₂, a content delivery server; and Ma, Mb, a dynamic image content file.

Arrows (1) to (8) given in Fig. 4 will be described as below.
(1) The monitor terminal Ta makes a request to the content delivery server C-S₁ for replaying a dynamic image content file Ma.
(2) The monitor terminal Ta downloads the dynamic image content file Ma from the content delivery server C-S₁ to reproduce content.
(3) The monitor terminal Ta transmits the satisfaction level data to the host computer DB-S in the course of replaying the dynamic image content file Ma.
(4) The host computer DB-S generates the chronological distribution data of satisfaction level data with regard to the dynamic image content file Ma and transmits the data to the monitor terminal Ta.
(5) The monitor terminal Tb makes a request to the content delivery server C-S₁ for replaying the dynamic image content file Ma.
(6) The monitor terminal Tb downloads the dynamic image content file Ma from the content delivery server C-S₁ to reproduce the content.
(7) The monitor terminal Tb transmits the satisfaction level data to the host computer DB-S in the course of replaying the dynamic image content file Ma.
(8) The host computer DB-S updates the chronological distribution data of satisfaction level data with regard to the dynamic image content file Ma and transmits to the monitor terminal Tb the chronological distribution data of satisfaction level data after updated.
(9) The monitor terminal Tc makes a request to the host computer for the chronological distribution data of the satisfaction level data with regard to the dynamic image content file Ma and downloads the chronological distribution data of satisfaction level data.

A description will be given of the chronological distribution data of satisfaction level data with reference to Fig. 5 to Fig. 7.

Fig. 5 (1) and (2) show the examples of the chronological distribution data of satisfaction level data respectively for the monitor terminal Ta and the monitor terminal Tb. The chronological distribution data of satisfaction level data are both related to the content data file Ma, and a site of content as content information is a hard disk of the content delivery server C-S₁, with content playback time being 50 min.

According to the chronological distribution data of satisfaction level data transmitted from the monitor terminal Ta, it has been recorded that the monitor terminal Ta transmitted the satisfaction level data once 12 minutes after the start of playback of the content data file Ma, 5 times 14 minutes thereafter, once 28 minutes thereafter, and 3 times 47 minutes thereafter, a total of 10 times.

Further, according to the chronological distribution data of satisfaction level data transmitted by the monitor terminal Tb, it has been recorded that the monitor terminal Tb has transmitted the satisfaction level data once 6 minutes after the start of playback of the content data file Ma, twice 12 minutes thereafter, twice 15 minutes thereafter, three times 28 minutes thereafter, once 40 minutes thereafter and 5 times 46 minutes thereafter, a total of 14 times.

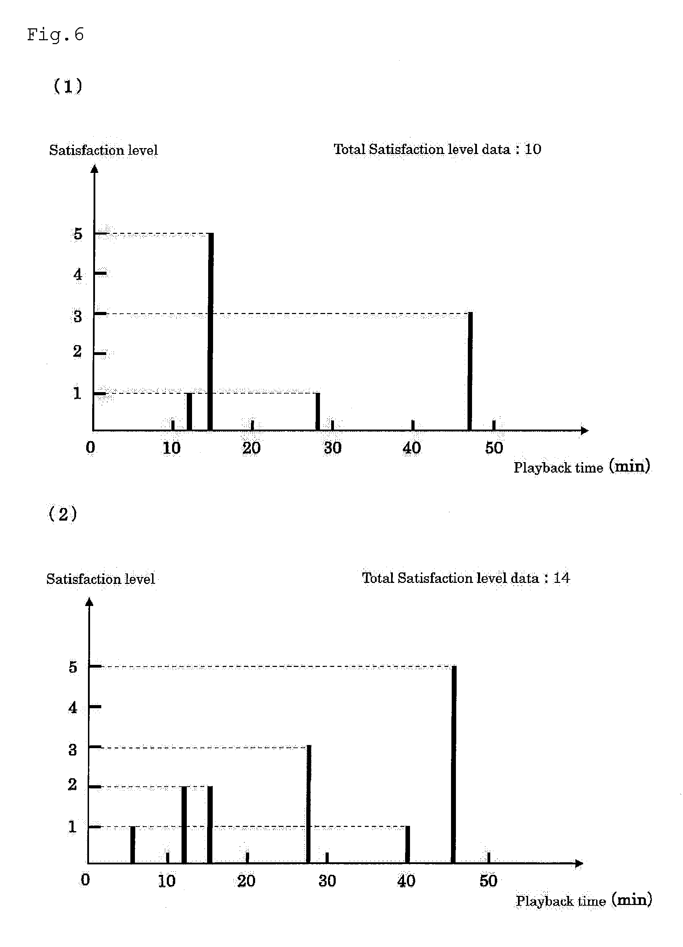

Fig. 6 (1) and (2) have expressed the chronological distribution data of satisfaction level data respectively for the monitor terminal Ta and the monitor terminal Tb by using a bar graph and made them available in a visualized manner.

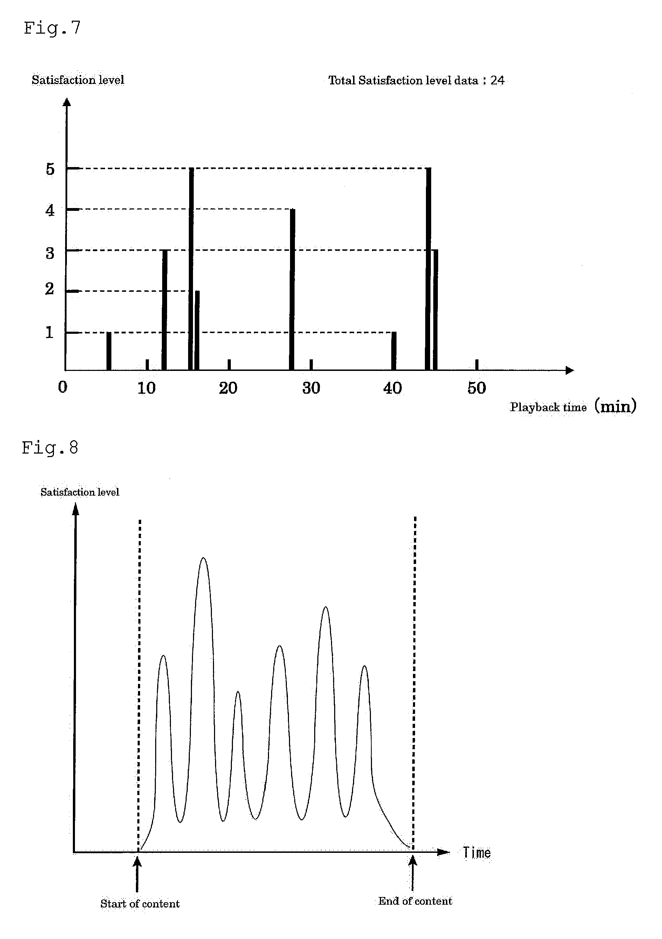

Further, in Fig. 7, the chronological distribution data of satisfaction level data for the monitor terminal Ta is merged into that for the monitor terminal Tb.

Fig. 8 is a chart which shows the satisfaction level of content in chronological order. In Fig. 8, a horizontal axis of the graph represents time, while a vertical axis represents the number of counts of satisfaction level data. The graph of Fig. 8 shows a chronological change in the number of counts of the satisfaction level data from the start of content to the end of content.

Viewers in use of monitor terminals are able to transmit to the host computer the satisfaction level data by a satisfaction-level input unit which inputs details of the content during a period of time from the start of the content to the end thereof. A received count of the satisfaction level data from the start of content to the end thereof is the number of times of the satisfaction level data that the host computer has received from the monitor terminals from a time instant of starting the content to a time instant of ending the content. It is possible to aggregate the received counts of the satisfaction level data every second. However, in evaluating a satisfaction level of the content, in place of aggregating counts for a short period of time such as every one second, calculation is made for an aggregate of received counts within a predetermined period of time such as 30 seconds, 1 minute and 2 minutes. To express in chronological order a distribution of aggregate of received counts of satisfaction level data from the start of the content to the end thereof means to provide a histogram in which a horizontal axis represents time and a vertical axis represents an aggregate of received counts within a predetermined period of time. The graph of Fig. 8 expresses in chronological order an aggregate of received counts of the satisfaction level data within a predetermined period of time.

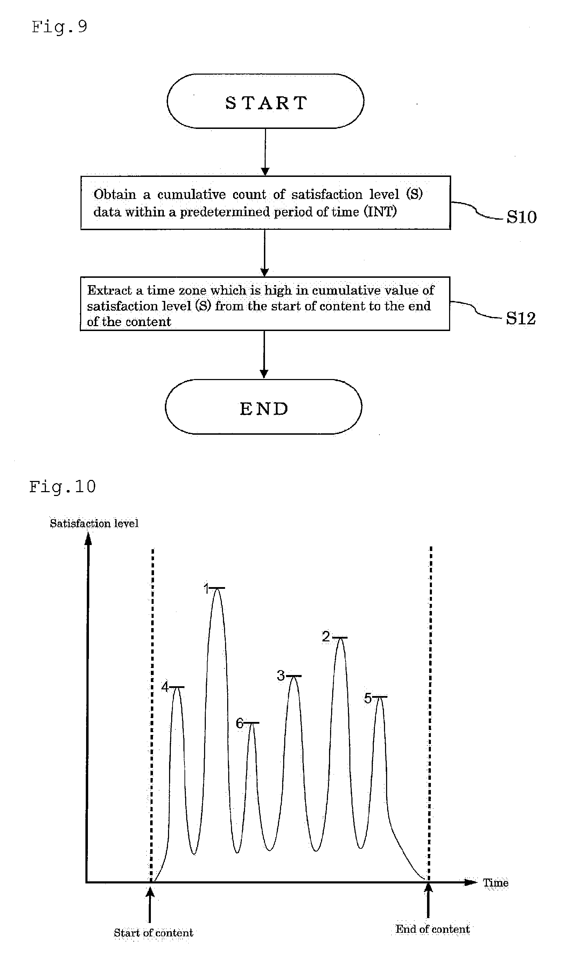

Fig. 9 shows a flow of extraction of peak values for a satisfaction level of content.

In extraction of peak values for a satisfaction level of content, there is obtained a cumulative received count value of satisfaction level (S) data within a predetermined period of time, for example, within a fixed interval (INT) of 2 minutes (Step S10). Next, from the start of content to the end of the content, there is extracted a time zone which is high in cumulative value of satisfaction level (S) (Step S12).

Fig. 10 shows content ranked in the first to the sixth of the satisfaction level (S) in the chronological chart of satisfaction level. Values of one to six are allocated in the proximity of a peak in descending order of a cumulative count value of the satisfaction level (S) between the start of the content to the end of the content. This suggests that where viewers who use monitor terminals have a feeling of "good," "like" or "satisfied" while viewing the content in progress, the viewers actively transmit a satisfaction level thereof to the host computer, thus making it possible to understand a temporal change in satisfaction level of details of the content that the viewers have.

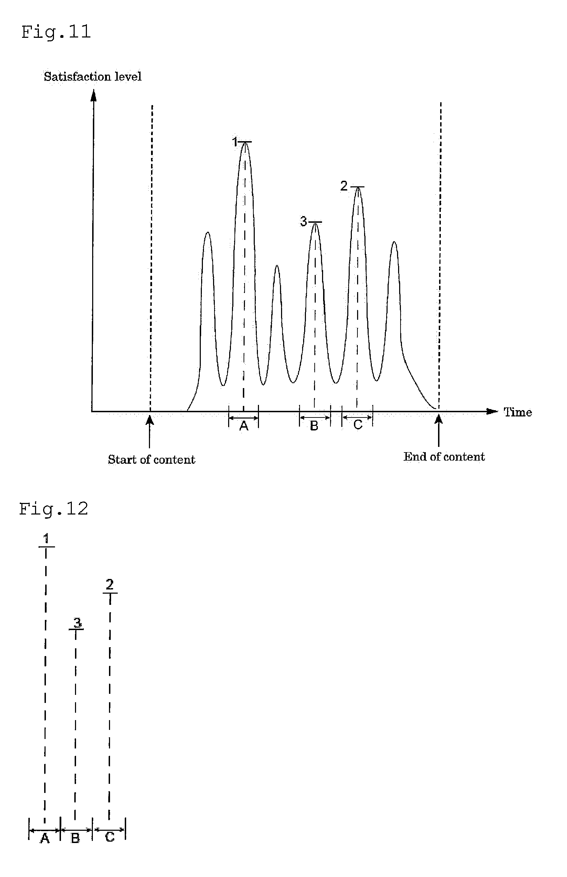

Further, as shown in Fig. 11, in the chronological chart which shows the satisfaction level of content, only details of the content which are great in cumulative count value of the satisfaction level (S) (for example, as shown in Fig. 11, details of the content approximately ranked in the first to the third) are to be reproduced, thus making it possible to automatically summarize and reproduce details of a conference call by taking opinions of viewers into account.

### [Embodiment 1]

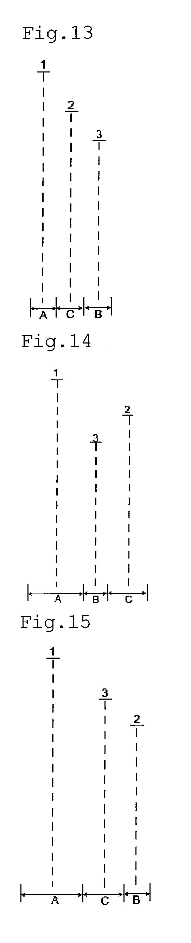

Example 1 covers several specific examples of replaying a summary of content. With reference to Fig. 12 to Fig. 15, a description will be given of four modes of method for replaying a summary. In the previously described chronological chart of satisfaction level of content, as shown in Fig. 11, only the details of the content ranked approximately in the first to the third are assumed to be reproduced. The four modes which are described here are as per the following (a) to (d).
(a) Mode in which according to a direction of the time axis of content, the content is reproduced only in a predetermined period of time in descending order of content earlier in time (refer to Fig. 12),
(b) Mode in which the content is reproduced only in a predetermined period of time in descending order of details of the content which are higher in satisfaction level (S) (refer to Fig. 13),
(c) Mode in which according to a direction of the time axis of content, the content is reproduced in descending order of content earlier in time, and time for playback is made longer for details of the content which are higher in satisfaction level (S) (refer to Fig. 14), and
(d) Mode in which details of the content are reproduced in descending order of those which are higher in satisfaction level (S) and time for playback is made longer for details of the content which are higher in satisfaction level (S) (refer to Fig. 15).

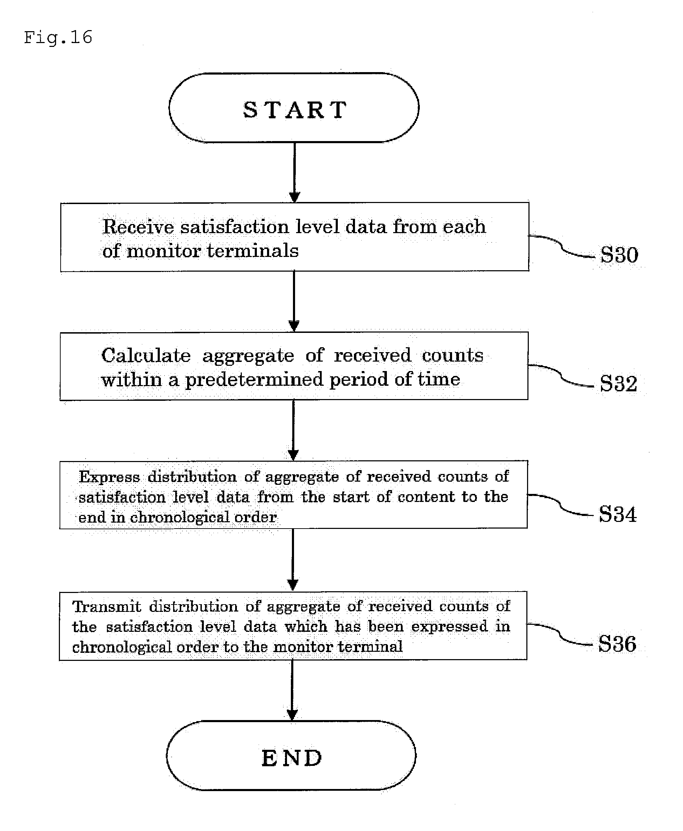

Next, a description will be given of processing by the host computer in the content evaluation playback system of the present invention with reference to a flow chart of Fig. 16.

As shown in the flow chart of Fig. 16, the host computer receives satisfaction level data from each of the monitor terminals (Step S30) and calculates an aggregate of received counts within a predetermined period of time from temporal information of the thus received satisfaction level data (Step S32). Next, a distribution of aggregate of received counts of satisfaction level data from the start of content to the end thereof is expressed in chronological order (Step S34) and the distribution of aggregate of received counts of the satisfaction level data which has been expressed in chronological order is transmitted to the monitor terminal (Step S36).

The host computer associates the content information data with the distribution data of aggregate of received counts which is the satisfaction level data expressed in chronological order and stores the data in a memory. Here, to associate and store the data in a memory is to make mutually-related two pieces of data available as a data base in a relational manner.

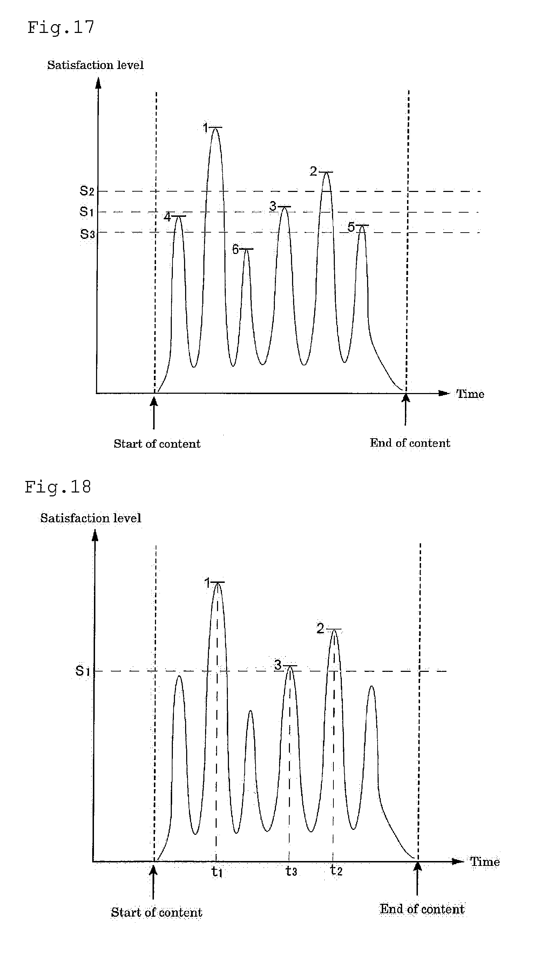

Next, a description will be given of a threshold parameter of satisfaction level with reference to Fig. 17. The threshold parameter of satisfaction level is used for determining the number of received counts of satisfaction level data which is ranked high. Where the number of received counts of satisfaction level data is greater than a threshold parameter, the satisfaction level is judged to be high. A difference is obtained by subtracting a threshold parameter value from the number of received counts of satisfaction level data, thereby determining time having a peak great in value of the difference. As shown in Fig. 17, it is assumed that three types of threshold parameters S₁ to S₃ are available. In the case of the threshold parameter S₁, three peak time instants which are ranked in the first second and third are greater than the threshold parameter S₁ in the number of received counts of satisfaction level data.

Further, in the case of the threshold parameter S₂ which requests a satisfaction level higher than the threshold parameter S₁, only two peak time instants which are ranked in the first and second are greater than the threshold parameter S₂ in the number of received counts of satisfaction level data.

Still further, in the case of the threshold parameter S₃ which requests a satisfaction level lower than the threshold parameter S₁, five peaks time instant ranked in the first, second, third, fourth and fifth are greater than the threshold parameter S₃ in the number of received counts of satisfaction level data.

As described above, a threshold parameter is adjusted, thus making it possible to control the number of extractions of time high in satisfaction level to be determined. Here, it is acceptable that a peak time instant is absolute time instant in the case of content in real time. Inmost cases, the peak time instant is offset time from a time instant of starting content. In particular, where viewers (listeners) listen to recorded content, the chronological information on received counts of satisfaction level data of the viewer (listeners) is offset time from the time instant of starting the content.

This threshold parameter can be adjusted manually at will or automatically depending on any of the parameters which is selected from the time of a content data file to the end thereof, a request size for time of replaying a summary and the number of viewers.

Next, a description will be given of a method for replaying summarized content in the content evaluation playback system of the present invention with reference to Fig. 18 to Fig. 20. The method for replaying summarized content in the present system is such that an aggregate of received counts within a predetermined period of time is calculated from temporal information on satisfaction level data received from a monitor terminal, a distribution of aggregate of received counts of satisfaction level data from the start of a content data file to the end thereof is expressed in chronological order, a time instant before a peak time instant ranked high in the number of received counts of satisfaction level data is given as an index point from the content data file, and content data within a predetermined period of time is reproduced from the index point.

Here, the above described index point is available in two modes. In a first mode, a time instant which is allowed to go back only by predetermined time from a peak time instant ranked high in the number of received counts of satisfaction level data is given as an index point.

In a second mode, a time instant before a time instant which is allowed to go back only by predetermined time from a peak time instant ranked high in the number of received counts of satisfaction level data and also a time instant when a scene of content is switched is given as an index point.

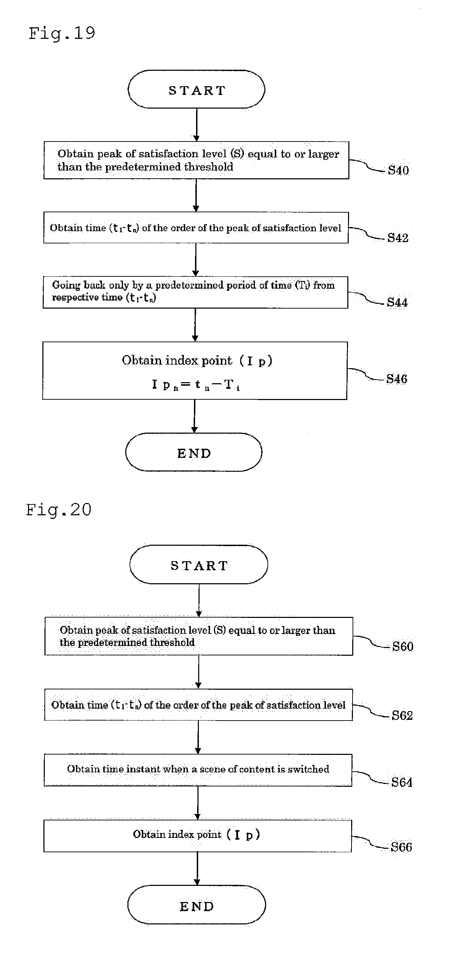

For example, in the graph of Fig. 18, three peak time instants are greater in the number of received counts of satisfaction level data than the threshold parameter S₁ of satisfaction level and the respective time instances are assumed to be t₁ to t₃. A first mode of index point is, as shown in a processing flow chart of Fig. 19, a time instant (Ipₙ = tₙ - Tᵢ; n = 1 to 3) which is a time instant going back only by a predetermined period of time Tᵢ from the respective time instants t₁ to t₃, and the index point is to be present at three sites.

A second mode of index point is, as shown in a processing flow chart of Fig. 20, a time instant before a time instant (Ipₙ = tₙ - Tᵢ; n=1 to 3) which is a time instant going back only by a predetermined period of time Tᵢ from the respective time instants t₁ to t₃ and also a time instant when a scene of content is switched. As with the above case, the index point is also to be present at three sites. Here, that a scene of content is switched indicates a time instant when image content is greatly changed in scene and background.

Further, a point at which data playback is carried out from an index point to terminate playback is also available in two modes, as with the index point. That is, in the first mode, playback will be terminated after a certain time playback. In a second mode, playback will be terminated after elapse of only a predetermined period of time and also if a scene of content is switched.

As described so far, in the content evaluation playback system of the present invention, details of the content are checked to understand a temporal change in satisfaction level data of monitor terminals operated by viewers. It is also found that details of the content can be summarized and reproduced, with opinions of viewers taken into account.

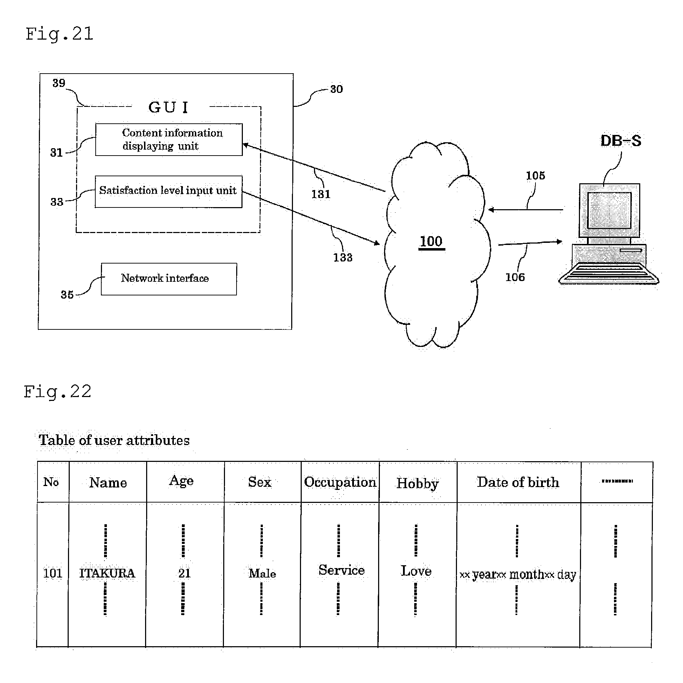

Fig. 21 shows a block diagram of the content evaluation playback system. As shown in Fig. 21, a monitor terminal 30 of the content evaluation playback system is provided with a graphical user interface (GUI) which is composed of a content information displaying unit 31 and a satisfaction-level input unit 33 and also provided with a network interface 35.

### [Embodiment 2]

In Example 2, a description will be given of a case where in the content evaluation playback system of Example 1, the host computer associates an attribute of a user who operates a monitor terminal with satisfaction level data.

The user attribute is selected from sex, age, occupation, hobby, year of birth, month of birth, animal symbol from the Chinese zodiac, blood type, marital history, nationality, birth place, with or without child, age of child, and academic history. For example, as shown in Fig. 22, a table of user attributes is stored at a storage medium of the host computer. The user attribute is associated with the satisfaction level data.

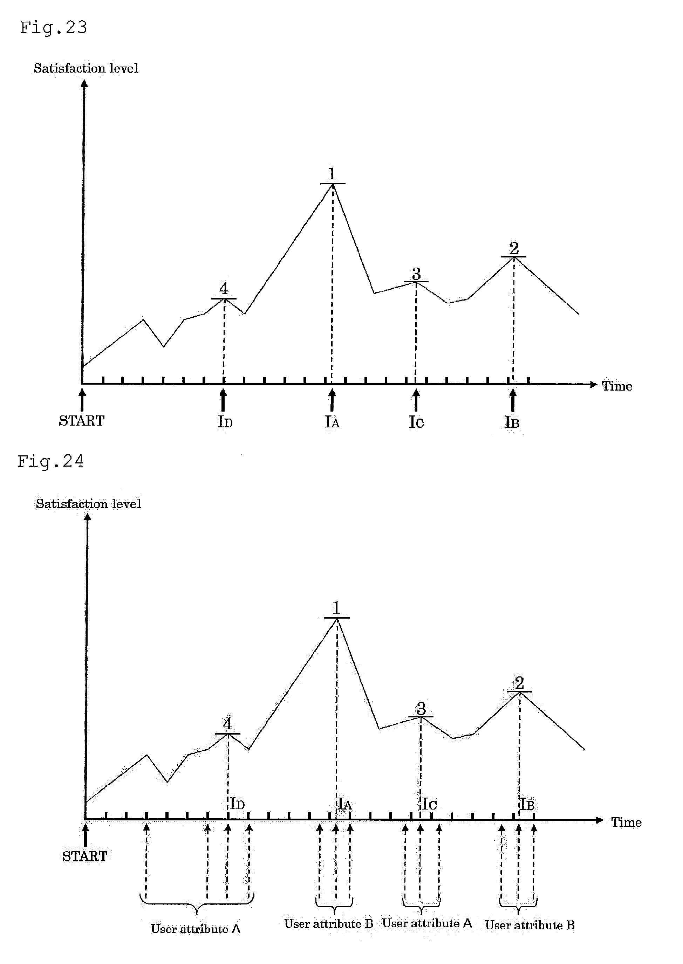

For example, as shown in Fig. 23, it is assumed that a distribution of aggregate of received counts of satisfaction level data expressed in chronological order is available with regard to a certain content data file. It is assumed that peaks of the satisfaction level data are present at 1 to 4 sites which are respectively time points of I_{A}, I_{B}, I_{C}, I_{D} from the start of content data. Next, as shown in Fig. 24, it is assumed that a user A and a user B input the satisfaction level data at their own timing. In Fig. 24, approximately at the time I_{C} and I_{D}, the user A inputs the satisfaction level frequently and approximately at the time I_{A} and I_{B}, the user B inputs the satisfaction level frequently. Here, the user attribute A is described as an attribute of the user A, while the user attribute B is described as an attribute of the user B. That is, approximately at the satisfaction level peaks A, B, the user B is satisfied and approximately at the satisfaction level peaks C, D, the user A is satisfied.

It is possible to easily understand what kinds of content are displayed at the above described timing, thus resulting in analysis of identity of a user who is satisfied with details of the specific content.

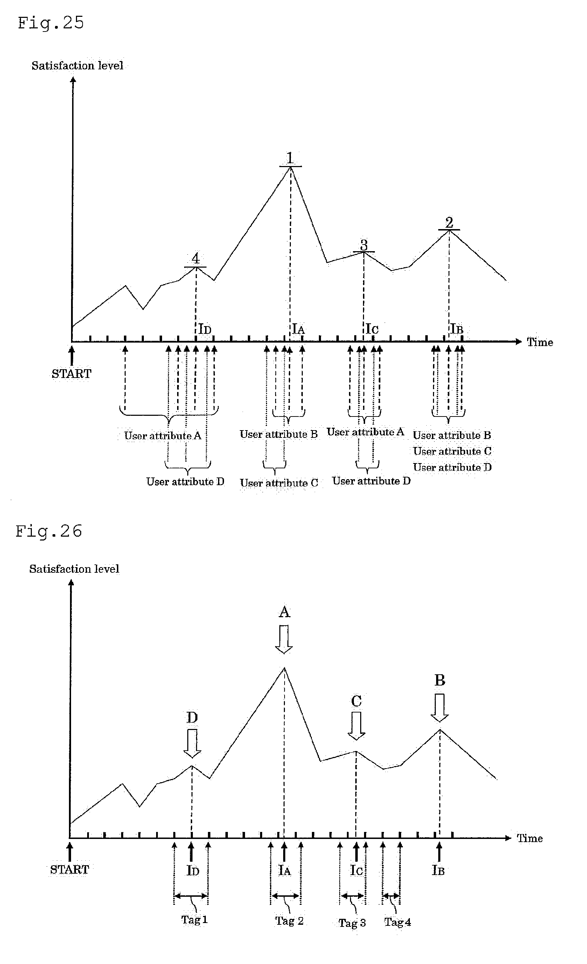

Further, as shown in Fig. 25, in the case of a large number of users (in Fig. 25, for the sake of convenience, four users of A to D), it is clear that analysis can be made for tendencies of users who are satisfied with details of the specific content (for example, age bracket, categorization by sex). In Fig. 25, it is clear that those who are satisfied with the timing I_{A} are the user B and the user C, while those who are satisfied with the timing I_{B} are the user B, the user C and the user D.

As described above, user attributes are associated with the satisfaction level data, thus making it possible to generate various types of questionnaire data, market research data and statistical data and also easily construct an aggregate data base of user attributes having the same type of sympathy (satisfaction level).

### [Embodiment 3]

Next, a description will be given of an example in which in the content evaluation playback system of the present invention, a monitor terminal sets any given character string to any given time zone in chronological distribution data of satisfaction level data and the host computer stores the character string in association with the chronological distribution data of satisfaction level data of the content information.

As shown in Fig. 26, any given character string is set in a content playback time line (hereinafter, referred to as tagging). In tagging, an elapsed time or an elapsed time zone from the start of playback of content data is designated to tag a part thereof. In Fig. 26, a tag 2 is tagged to a time zone before and after time IA at peak A point where the largest number of satisfaction level data is found. Further, in a similar manner, a tag 4 is tagged to a time zone before and after time IB at peak B point where the next largest number of satisfaction level data is found. Still further, a tag 3 is tagged to a time zone before and after the time I_{C} at peak C point of the number of satisfaction level data. A tag 1 is tagged to a time zone before and after time I_{D} at peak D point of the number of satisfaction level data.

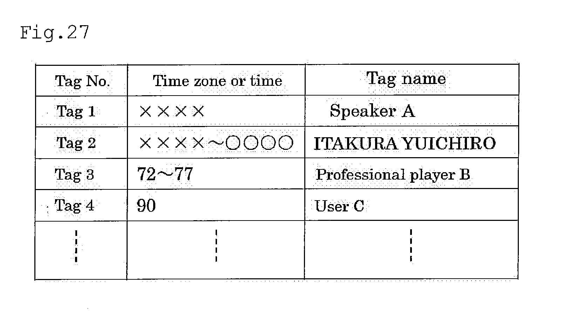

Details of tagging are such that, for example, as described in the tagging table of Fig. 27, the tag 1 is tagged at a time instant of XXXX and given "speaker A" as a tag name. Where only time instant is designated, there is tagged a predetermined period of time from the time instant, for example, only one-minute elapse is tagged. Further, the tag 2 is tagged at a time zone of XXXX to ooo and given "ITAKURA YUICHIRO" as a tag name. The tag 3 is tagged for 3 minutes from 72 minutes to 77 minutes and given "professional player B" as a tag name. The tag 4 is tagged until elapse of a predetermined period of time from 90 minutes and given "user C" as a tag name.

It is possible to combine streaming content by using the above described tag names as a key. It is also possible to aggregate the number of satisfaction level data which has been input to a time line of streaming data having the thus tagged tag name. That is, where another listener inputs satisfaction level data to a particular part of streaming data, it is possible to understand that the listener is satisfied with a tag name given to the part. That is, it is possible to accumulate the number of satisfaction level data for each tag name so given.

In a conventional content delivery server and a monitor terminal which monitors the server, a time line of streaming content such as dynamic image data and music data is tagged, thus making it possible to combine streaming content by using a tag name so given. It is also possible to aggregate the number of satisfaction level data which has been input to a time line of streaming data of a tag name so given.

### [Industrial Applicability]

The present invention is effective as a content evaluation system and a content playback system with use of the Internet.

### [Description of Symbols]

- Tₐ - T_{c}: Monitor terminal
- DB-S: Host computer
- C-S₁, C-S₂: Content delivery server

## Claims

1. A content evaluation playback system comprising:
a network which transfers a packet by means of the Internet Protocol;
at least one unit of a monitor terminal which is equipped with a content information displaying unit which identifies and displays spot information on a content resource present on the Internet, a graphical user interface which is composed of a satisfaction-level input unit for inputting a satisfaction level of content and a network interface;
a host computer which exchanges data between the monitor terminals; and
a content delivery server, wherein
1) the host computer receives temporal information on satisfaction level data and content information from individual monitor terminals, calculates an aggregate of received counts of satisfaction level data within a predetermined period of time, expresses in chronological order a distribution of aggregate of received counts of satisfaction level data from the start of the content to the end thereof, which is then given as chronological distribution data of satisfaction level data for each content information, stores the chronological distribution data of satisfaction level data in association with the content information or in an integral manner,
and transmits the chronological distribution data of satisfaction level data to the individual monitor terminals by request from the monitor terminals, and
2) the monitor terminal gives time on the basis of a playback time line of the content as temporal information on satisfaction level data when the satisfaction level is input from the satisfaction-level input unit,
displays the chronological distribution data of satisfaction level data received from the host computer, and
gives proximity of a peak time instant ranked high in the chronological distribution data of satisfaction level data as an index point, thereby replaying the content in a predetermined period of time from the index point.

2. The content evaluation playback system according to Claim 1, wherein
the host computer is able to update the recorded chronological distribution data of satisfaction level data by using the temporal information of satisfaction level data of the same content information which is received later from the same or a different monitor terminal.

3. The content evaluation playback system according to Claim 1 or Claim 2, wherein
the monitor terminal is provided with a user registration unit which registers user attribute information and transmits the thus registered user attribute information to the host computer, and
the host computer is provided with a unit which associates the satisfaction level data with the user attribute information obtained from the user registration unit.

4. The content evaluation playback system according to Claim 3, wherein
the host computer is additionally provided with a unit which makes analysis of tendencies of users who have input satisfaction level data on the details of the specific content by using the details of the content at the timing of receiving the satisfaction level data and a user attribute associated with the satisfaction level data.

5. The content evaluation playback system according to any one of Claim 3 to Claim 5, wherein
the user attribute is to be selected from a group of sex, age, occupation, hobby, year of birth, month of birth, animal symbol from the Chinese zodiac, blood type, marital history, nationality, birth place, use language, residence, site of utilization, with or without child, age of child, and academic history.

6. The content evaluation playback system according to Claim 1 or Claim 2, wherein
in the satisfaction-level input unit,
a unit which inputs a satisfaction level is used or
satisfaction level data is input two times or more within a predetermined period of time, thus making it possible to input satisfaction level data high in satisfaction level.

7. The content evaluation playback system according to Claim 1 or Claim 2, wherein
the monitor terminal is able to set any given character string to any given time zone in the chronological distribution data of satisfaction level data and transmits to the host computer the content information, the time zone information and the character string, where any given character string is set, and
upon receipt of the content information, the time zone information and the character string, the host computer stores them in association with the chronological distribution data of satisfaction level data of the content information.

8. The content evaluation playback system according to Claim 1, wherein
the index point is a time instant which has been allowed to go back only by time set in advance from a peak time instant ranked high by the number of received counts of the satisfaction level data.

9. The content evaluation playback system according to Claim 1, wherein
the index point is a time instant which is before a time instant which has been allowed to go back only by time set in advance from a peak time instant ranked high in the number of received counts of the satisfaction level data and also a time instant when a scene of content is switched.

10. The content evaluation playback system according to Claim 1, wherein
whether the number of received counts of the satisfaction level data is ranked high or not is determined based on the fact that the number of received counts of the satisfaction level data is greater than a threshold parameter, and
the threshold parameter can be adjusted depending on any parameter which is selected from the time of the start of content to the end thereof, request size for summary playback time and the number of viewers.

11. The content evaluation playback system according to Claim 1, wherein
time of playback from an index point can be adjusted depending on the time from the start of content to the end thereof or the number of peaks which is greater than a threshold parameter of the number of received counts of satisfaction level data.

12. The content evaluation playback system according to Claim 1, wherein
in the case of playback from an index point, that playback is performed in descending order of content with an index point which is earlier in time instant or in descending order of content which is higher in satisfaction level.

13. The content evaluation playback system according to Claim 12, wherein
in the case of the above described playback,
the content which is ranked higher in satisfaction level is made longer in playback time than the content which is ranked lower in satisfaction level.
